# EUROPEAN PATENT APPLICATION

(11) **EP 1 645 867 A2**
(43) Date of publication of application: **12.04.2006**
(21) Application number: 05021698.5
(22) Date of filing: 05.10.2005
(51) Int. Cl.: G01N 21/93, G01N 21/89

(54) **Device for calibrating and checking the calibration of a surface inspection apparatus for film materials, surface inspection apparatus including such device and process for checking the calibration of a surface inspection apparatus**

(30) Priority: 05.10.2004 IT MI20041881
(71) Applicant: ELECTRONIC SYSTEMS S.P.A., 28015 Momo (NO) (IT)
(72) Inventor: Masotti, Alessandro, 21013 Gallarate (IT); Rizzo, Carlo, 21013 Gallarate (IT); Mora, Piergiorgio, 28021 Borgomanero (Novara) (IT); Martena, Tiziana, 02037 Poggio Moiano (Rieti) (IT)
(74) Representative: Premru, Rok

(57) **Abstract**

This patent relates to a device for calibrating and checking the calibration of a surface inspection apparatus for moving film materials; the patent further relates to a surface inspection apparatus for film materials including such calibration device; finally, this patent concerns a process for checking the calibration of a surface inspection apparatus for moving films.

## Description

This patent relates to a device for calibrating and checking the calibration of a surface inspection apparatus for moving film materials.

The patent further relates to a surface inspection apparatus for film materials including such calibration device.

Finally, this patent relates to a process for checking the calibration of a surface inspection apparatus for moving films.

The quality of film materials may be deteriorated by flaws, such as: foreign materials, cuts, scratches, tears, abnormal density areas, etc.

Film materials are known to be quality checked by using surface inspection apparatuses which can capture digital images of the moving film and automatically check such images for processing flaws and detect certain flaw information, such as: The number, size, shape of flaws, the possible periodic nature thereof, etc.

Prior art inspection apparatuses include one or more linear light sources to illuminate a linear inspection area - typically a strip transverse to the film feed direction, having a width of a few millimeters - and one or more linear cameras (CCD) arranged along a line, and capable of capturing digital linear images of the illuminated strip of the moving film at a certain rate.

The digital linear images that are periodically captured by the cameras are stored to form a two-dimensional image of the moving film.

The two-dimensional image so obtained is continuously checked for flaws, i.e. holes, tears, areas having an upper or lower density than a predetermined range, foreign material on the film surface, etc., by a computer.

In short, these flaws are detected by light contrast against the flawless condition and/or by light contrast against average lighting values.

The type of lamps and the arrangement thereof - with respect both to the film material and to the linear cameras - depend on the type of material to be inspected and on the type of flaw/s to be monitored.

The material to be examined is particularly illuminated by tubular fluorescent lamps which easily form by their linear shape a linear inspection area.

Depending on the arrangement of light sources and cameras with respect to the material to be inspected, cameras may receive direct, reflected, diffused, grazing light or a combination of reflected and direct light or reflected and diffused light.

The slow but progressive decrease of lamp efficiency with time causes a progressive deterioration of film illuminating conditions at the inspection area.

If the film is illuminated by multiple lamps, then the decrease of illuminating efficiency at the inspection area is not even uniform and changes with each lamp.

When fluorescent lamps are used, illumination changes even along the same lamp (stronger at the higher temperature ends of the lamp, and weaker in the lower temperature portion of the lamp).

Any dust on the lamps would also reduce the intensity of illumination of the inspection area.

Furthermore, any dust deposited on the lenses of linear cameras would reduce image contrast.

Since flaws are discriminated with particular reference to light contrast differences and absolute brightness values, a general deterioration of the quality and stability of captured images would cause false flaw detection or failed flaw detection.

Error recognition performances tend to decrease with time, and particularly the apparatus tends to detect artifacts.

Therefore, prior art automatic inspection apparatuses require frequent calibration (i.e. flaw detection performance) checks.

When calibration is no longer reliable, a new calibration has to be performed, e.g. by adjusting the sensitivity of the viewing system.

In conventional inspection apparatuses, calibration checks may be only performed in static conditions, i.e. when the film manufacturing line is shut down.

However, a shutdown of a film manufacturing system would involve very high costs.

This invention provides a solution to prior art problems and particularly to the above mentioned problems.

This solution is provided by a device for on-line calibration and dynamic calibration check of a flaw recognition apparatus according to claim 1, by a surface inspection apparatus for film materials according to claim 10 and by a calibration check process according to the principle of claims 11 and 13.

A possible embodiment of the invention will be now described with reference to the drawings in which:

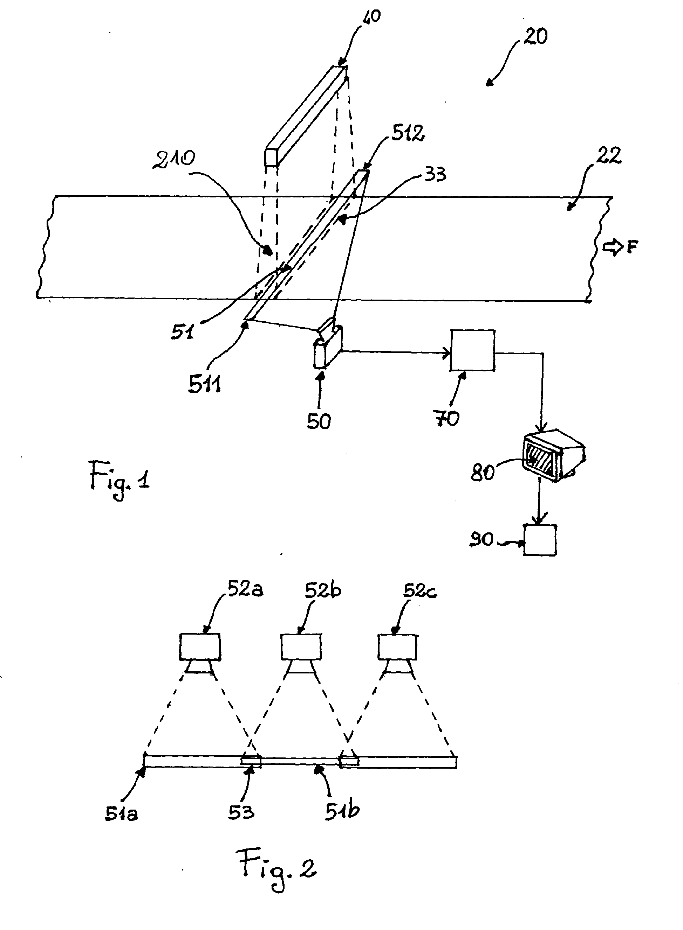

- Figure 1 is a perspective view of a surface inspection apparatus;
- Figure 2 is a view of a detail of the inspection apparatus according to a second embodiment;

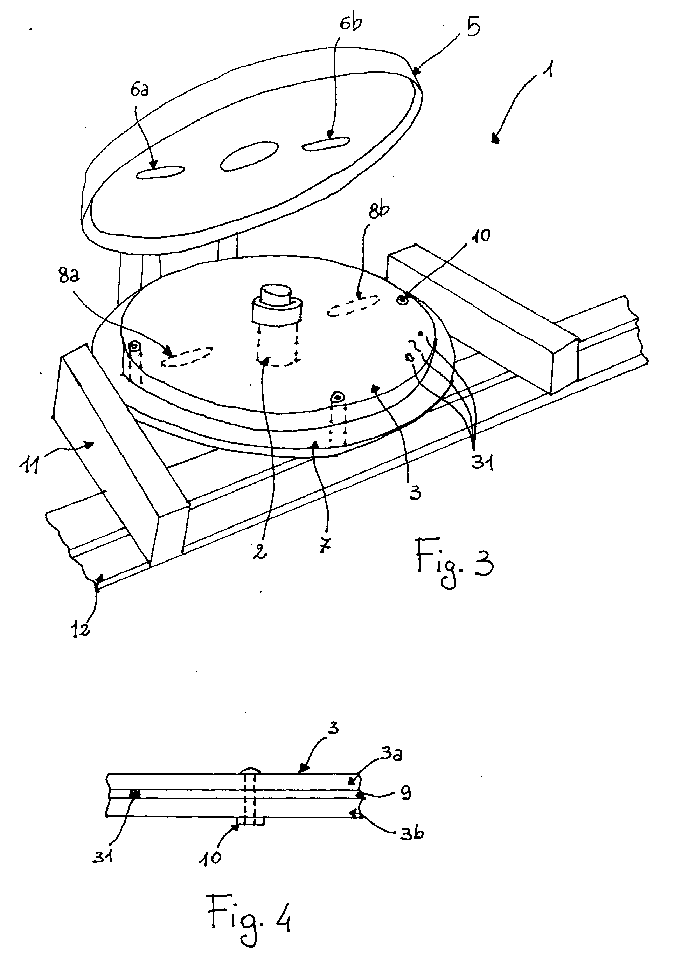

- Figure 3 is a perspective view of an on-line calibration device;
- Figure 4 is a sectional view of a detail of Figure 3 in accordance with an alternate embodiment;
- Figure 5 is a perspective view of the surface inspection apparatus and of the on-line calibration device in accordance with an alternative embodiment;

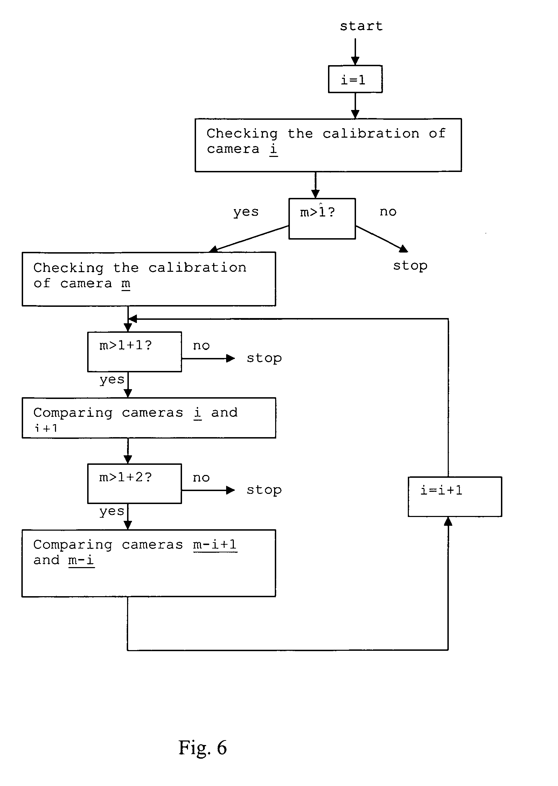

- Figure 6 is a flow chart of the calibration check process.

Numeral 20 generally denotes a surface inspection apparatus for film materials 22 moving along a direction F.

It shall be noted that the term "film material" as used herein includes paper webs, nonwoven webs, polyolefin films, polyvinyl chloride and laminated films.

The apparatus 20 comprises illuminating means 40 and linear viewing means 50.

The illuminating means 40 and the linear viewing means 50 are placed in the proximity of a space 210, through which a film material 22 passes along a feed direction F.

The illuminating means 40 are adapted to illuminate a linear inspection area 33, situated within said space 210, extending transverse to the direction of feed F of the film 22.

The illuminating means 40 and the viewing means 50 may be disposed on the same side and/or on opposite sides with respect to the film 22, with specific illuminating angles for the nature of the material and its optical characteristics.

In the preferred embodiments, the illuminating means 40 are one or more linear light sources, e.g. fluorescent lamps or arrays of suitably equalized LED emitters.

The linear viewing means 50 have a total viewing range 51, with two opposite ends 511, 512 and can periodically capture linear digital images of a film material 22 passing through the linear inspection area 33.

Preferably, the total width of the viewing range 51 is greater than the width of the film material 22, in other words the opposite ends 511, 512 of the viewing range 50 project out of the edges of the film material 22 to be measured.

The ratio between the width of the film material and the total number of pixels of the viewing means 50 is selected in such a manner as to be greater than the minimum desired spatial resolution value.

For example, more than 4000 pixel are needed to obtain a spatial flaw resolution of at least 0.5 mm/pixel on a 2000 mm wide film material.

The spectral range of said linear viewing means (50) falls within the band between 400 nm and 800 nm.

By way of example, commercially available linear monochromatic cameras have a visual range of 500 to 2000 mm, a definition of 1024, 2048, or 4096, 6144, 8192 pixels, operate with a 256 grey scale and may acquire up to 80 Mpixels of visual data per second.

A high number of gray shadows allows a better capability of flaws detection.

The linear viewing means 50 include one, two or more linear cameras 52; 52a and 52b; 52a, 52b and 52c, arranged along a line transverse to the feed direction F of the film 22.

If the viewing system 50 has at least two linear cameras 52a, 52b and 52c (see Figure 2), their position is such that adjacent cameras have partly overlapping viewing ranges (51, 51b and 51c).

The inspection apparatus further has means 70 (including a memory), connected to the linear viewing means 50, for creating a two-dimensional image 80 of the film material 22 passing through the linear inspection area 33.

Means 90, e.g. conventional software running on a computer, for analyzing the two-dimensional digital image 80 to detect the flaws on the inspected film 22.

Such apparatus includes a device, generally denoted by numeral 1, for on-line calibration (in static conditions) and dynamic calibration check.

The device 1 essentially comprises a rotating shaft 2 and a disk 3, removably connected to the rotating shaft 2, which interferes with one end 511 or 512 of the total viewing range 51 of the linear viewing means 50.

The disk 3 has one or more reference flaws 31.

The disk 3 can rotate at such an angular speed ω that the peripheral speed Vp of the sample flaws 31 on the disk 3 is substantially similar to the speed at which the film 22 is fed.

It shall be noted that speed differences of the order of 5% shall be intended as included in the definition of substantially similar.

The disks may be replaced to perform a reliability check on the inspection apparatus with different types and/or sizes of flaws.

A lid 5, hinged to the device 1, can cover a first side of the disk 3 to prevent any risk or injuries and damages to the disk.

The lid 5 has two first slits 6a, 6b, diametrically aligned with respect to the disk 3, to allow the passage of light.

A preferably fixed cover 7, with two second slits 8a, 8b, is provided on the other side with respect to the disk 7.

The second slits 8a, 8b are placed opposite the first slits 6a, 6b, to allow light to pass through the disk 3.

The slits are sized to allow proper illumination of the disk 3 in a variety of applications.

The disk 3 preferably has a diameter of 150 mm to 200 mm and the slits 6a, 6b; 8a, 8b are 30 to 40 mm long and 10 to 15 mm wide.

In one possible embodiment, the disk 3 is formed by a transparent support frame 3a, 3b, containing a sample of film material 9, having one or more known flaws 31.

Particularly, the flaws 31 have well-defined shape and size characteristics.

The two transparent layers 3a, 3b that form the sample support, are preferably joined together by removable fastener means 10, e.g. screws, to allow replacement of the sample 9.

In another possible embodiment, the disk 3 is formed by a single layer of transparent material and the flaws 31 are silk-screened, engraved or printed on suitable materials embedded therein.

The shape of such flaws and their optical properties are critical to assess the ability to classify the flaws detected by the inspection apparatus during its operation.

The basic characteristics of real flaws, both in terms of shape and optical behavior, are detected to reproduce their image in a styled and easily reproducible manner on the disk.

Applicable transparent materials include lexan, polystyrene or glass, having no apparent optical flaws.

Those skilled in the art will appreciate the advantage of checking the calibration conditions of the surface inspection apparatus in real operating conditions.

In the embodiments of the figures, the device 1 is mounted to a carriage 11 which is engaged with a guide 12 transverse to the feed direction F of the film 22.

This additional feature allows to perform the calibration check directly at both ends of the viewing range of the inspection apparatus.

Therefore, this feature is particularly advantageous when the viewing means include at least two cameras, because it allows to directly check the calibration of the cameras placed at the ends.

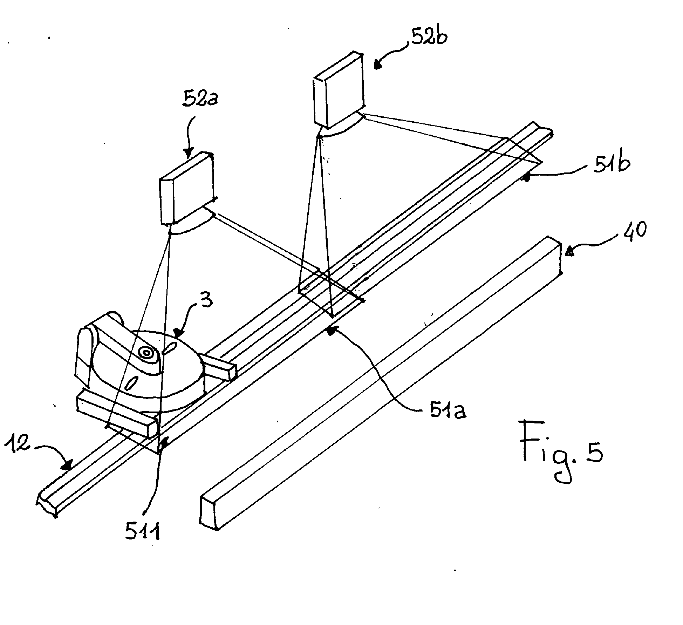

While Figure 5 shows an example with two cameras, the calibration check process may be advantageously applied to a greater number of cameras.

Finally, this feature also allows to use the device for on-line (onboard) calibration, even though only in static conditions (i.e. when the system is shut down).

If the inspection apparatus has only one linear camera, the dynamic calibration check process includes the steps of:
- rotating a flat sample 3, having one or more reference surface flaws 31, for a predetermined number of times, at one end of the viewing range 511 or 512, i.e. in closeness at one of the two edges of the moving film 22, at a peripheral speed which substantially equals the feed speed of the film 22;
- illuminating two diametrically opposed inspection area (6a,8a; 6b,8b) on said flat rotating sample (3);
- at each rotation of said rotating sample (3) taking a picture of one of said inspection area (6a,8a);
- at each one and half rotation of said rotating sample (3) taking a picture of the second of said inspection area (6b, 8b);
- comparing the picture the pictures of said first and second inspection area (6a,8a; 6b,8b) and detecting the flaw (if any);
- at each sample rotation and for each reference flaw being detected:
   - measuring the longitudinal and transverse dimensions of the flaw; and/or
   - measuring the flaw area; and/or
   - measuring the chromatic dimension of the flaw (grey scale histogram); and/or
   - finding the morphological class of the flaw;
- determining the average and/or the standard variation σ of the above measurements;
- comparing the results of the above measurements with nominal reference results to certify that the inspection apparatus complies with the original calibration.

By comparing the pictures of the same portion of the rotating sample from two diametrically opposed positions flaws like protuberances and scratches can be detecte, i.e. flaws that cannot be detected by chromatic contrast but only illuminating them from different points.

Preferably, each measurement is repeated at least 60 times for the above measurements to be significant in terms of statistic sampling.

If the inspection apparatus comprises two linear cameras, the above steps are repeated simultaneously on the other edge of the film, so that the calibration of both linear cameras may be directly checked.

If the inspection apparatus comprises three or more linear cameras, the dynamic calibration check process further comprises the steps of indirectly checking the calibration of intermediate cameras, by comparing flaw detection of the outermost cameras with flaw detection of inward adjacent cameras at the overlapping viewing area 53, and repeating such step until all cameras have been checked. Continuous camera check information is displayed on the terminal of the inspection apparatus, and any deviation from the original calibration is highlighted.

## Claims

1. A device (1) for on-line calibration and dynamic calibration check of a flaw detection apparatus of a surface inspection apparatus for moving film materials (2) comprising
a) a rotating shaft (2);
b) a disk (3) removably connected to said rotating shaft (2), which has one or more reference flaws (31),
c) a lid (5) for covering a first side of said disk (3), said lid (5) having two first slits (6a, 6b) diametrically aligned with respect to said disk (3);
d) a cover (7) for covering a second side of said disk (3), said cover (7) having two second slits (8a, 8b) opposite said first slits (6a, 6b).

2. A device as claimed in claim 1, wherein said lid (5) is hinged to said device (1).

3. A device as claimed in claim 1 or 2, wherein said disk (3) has a diameter of 150 mm to 200 mm.

4. A device as claimed in claim 1, 2 or 3,, wherein the slits (6a, 6b, 8a, 8b) are 30 to 40 mm long and 10 to 15 mm wide.

5. A device as claimed in any of the preceding claims, wherein said disk (3) is formed by two transparent outer layers (3a, 3b) and an intermediate sample of film material (9), having said flaws (31) thereon.

6. A device as claimed in claim 5, wherein daid two transparent layers (3a, 3b) are joined together by removable fastener means (10).

7. A device as claimed in one of claims 1 to 4, wherein said disk is made of a transparent material and the flaws (31) are silk-screened on the surface of said disk (3).

8. A device as claimed in claim 5, 6 or 7, wherein said transparent material is glass, lexan or polystyrene.

9. A device as claimed in any of claims 1 to 8, further **characterized in that** it is mounted to a carriage (11) which is engaged with a guide (12).

10. A surface inspection apparatus for film materials (22) moving along a direction (F), comprising
a) illuminating means (40) and linear viewing means (50), said illuminating means (40) and said linear viewing means (50) defining a space (210) wherethrough a film material (22) may pass along a feed direction (F), said illuminating means (40) being adapted to illuminate a linear inspection area (33) within said space (210), extending transverse to the feed direction (F) of said film (22), said linear viewing means (50) being adapted to periodically capture digital linear images of a film material (22) passing through said linear inspection area (33), said linear viewing means (50) having a viewing range (51) whose width has two opposite ends (511, 512);
b) means (70), connected to said linear viewing means (50), for creating a two-dimensional image (80) of a film material (22) passing through said linear inspection area (33);
c) means (90) for analyzing said two-dimensional digital image (80) and discriminating the flaws detected on the inspected film (22);
**characterized in that** it includes a device (1) for on-line calibration and dynamic flaw recognition performance check as claimed in any of claims 1 to 9.

11. A surface inspection apparatus, according to claim 10, wherein said linear viewing means (50)works with more than two levels of grey.

12. A surface inspection apparatus, according to claim 10 or 11, wherein the spectral range of said linear viewing means (50) falls within the band between 400 nm and 800 nm.

13. A process for dynamically checking flaw recognition sensitivity calibration of a surface inspection apparatus for moving film materials (22) of the type comprising one linear camera (52)including the steps of:
- rotating a flat sample (3), having at least one reference surface flaw (31), for a predetermined number of times, at one end of the viewing range (511 or 512) of camera i=1, at a peripheral speed which substantially equals the feed speed of said film (22);
- illuminating two diametrically opposed inspection area (6a,8a; 6b,8b) on said flat rotating sample (3);
- at each rotation of said rotating sample (3) taking a picture of one of said inspection area (6a,8a);
- at each one and half rotation of said rotating sample (3) taking a picture of the second of said inspection area (6b, 8b);
- comparing the picture the pictures of said first and second inspection area (6a,8a; 6b,8b) and detecting the flaw (if any);
- at each rotation of said sample (3) and for each of said reference flaws (31) being detected:
• measuring the longitudinal and transverse dimensions of said flaw; and/or
• measuring the area of said flaw; and/or
• measuring the chromatic dimension of said flaw (grey scale histogram); and/or
• finding the morphological class of said flaw;
- determining the average and/or the standard variation (σ) of each of said measurements;
- comparing the results of said measurements with nominal reference results to certify that said inspection apparatus complies with the original calibration.

14. A process as claimed in claim 13, wherein said rotating sample (3) is positioned at one end of the total viewing range of the linear camera (50).

15. A process for dynamically checking the flaw recognition sensitivity calibration of a surface inspection apparatus for moving film materials (22), of the type comprising a number m of linear cameras (52a, 52b, 52c) equal to or greater than 2, each linear camera (52a, 52b, 52c) having a viewing range (51a, 51b, 51c), the viewing range of each camera (52a, 52b) partly overlapping the viewing range of the adjacent camera/s (52b, 52c), the array m of linear cameras defining a total viewing range (51), extending transverse to the feed direction of the film (20), whose ends (511, 512) project out of the film material (22), including the steps of:
a) setting a counter i=1;
b) rotating a flat sample (3), having at least one reference surface flaw (31), for a predetermined number of times, at one end of the viewing range (511 or 512) of camera i, at a peripheral speed which substantially equals the feed speed of said film (22);
c) illuminating two diametrically opposed inspection area (6a,8a; 6b,8b) on said flat rotating sample (3);
d) at each rotation of said rotating sample (3) taking a picture of one of said inspection area (6a,8a);
e) at each one and half rotation of said rotating sample (3) taking a picture of the second of said inspection area (6b, 8b);
f) comparing the picture the pictures of said first and second inspection area (6a,8a; 6b,8b) and detecting the flaw (if any);
g) at each rotation of said sample (3) and for each of said reference flaws (31) being detected:
• measuring the longitudinal and transverse dimensions of said flaw; and/or
• measuring the area of said flaw; and/or
• measuring the chromatic dimension of said flaw (grey scale histogram); and/or
• finding the morphological class of said flaw;
d) determining the standard variation (σ) of said measurements;
e) comparing the results of said measurements with nominal reference results to certify that said inspection apparatus complies with the original calibration;
f) rotating a flat sample (3), having at least one reference surface flaw (31), for a predetermined number of times, at one end of the viewing range (511 or 512) of camera m, at a peripheral speed which substantially equals the feed speed of said film (22);
g) at each half rotation of said sample (3) and for each of said reference flaws (31) being detected:
• measuring the longitudinal and transverse dimensions of said flaw; and/or
• measuring the area of said flaw; and/or
• measuring the chromatic dimension of said flaw (grey scale histogram); and/or
• finding the morphological class of said flaw;
h) determining the average and/or the standard variation (σ) of said measurements;
i) comparing the results of said measurements with nominal reference results to certify that said inspection apparatus complies with the original calibration;
and, if m > 2,
j) for each flaw detected at the overlapping viewing range (53) and for each camera i and i+1
• measuring the longitudinal and transverse dimensions of said flaw; and/or
• measuring the area of said flaw; and/or
• measuring the chromatic dimension of said flaw (grey scale histogram); and/or
• finding the morphological class of said flaw;
k) comparing the results of said measurements of cameras i and i+1;
and, if m > 3,
1) for each flaw detected at the overlapping viewing range (53) and for each camera m-i+1 and m-i
• measuring the longitudinal and transverse dimensions of said flaw; and/or
• measuring the area of said flaw; and/or
• measuring the chromatic dimension of said flaw (grey scale histogram); and/or
• finding the morphological class of said flaw;
m) comparing the results of said measurements of cameras m-i+1 and m-i;
n) setting the counter i = i+1
o) going back to step j) of the process.

16. A process as claimed in claim 13, wherein said rotating sample (3) is sequentially positioned at the ends (511, 512) of the total viewing range of said linear cameras.

17. A process, according to any one of claim 13 to 16, wherein the spectral range of said linear camera (52) falls within the band between 400 nm and 800 nm.

18. A process, according to any one of claims 13 to 17, wherein said linear camera (52) works with more than two levels of grey.
